# FASCICULE DE BREVET EUROPEEN

(11) **EP 3 453 847 B1**
(45) Date de publication et mention de la délivrance du brevet: **11.11.2020**
(21) Numéro de dépôt: 18192050.5
(22) Date de dépôt: 31.08.2018
(51) Int. Cl.: F01D 25/24

(54) **CARTER EN MATÉRIAU COMPOSITE À GÉOMÉTRIE RAIDISSANTE**
GEHÄUSE AUS VERBUNDMATERIAL MIT VERSTEIFENDER GEOMETRIE
COMPOSITE HOUSING WITH REINFORCING GEOMETRY

(30) Priorité: 06.09.2017 FR 1758209
(43) Date de publication de la demande: 13.03.2019
(73) Titulaire: SAFRAN AIRCRAFT ENGINES, 75015 Paris (FR)
(72) Inventeur: ZACCARDI, Cédric, 77550 MOISSY-CRAMAYEL (FR); SAURAT, Mathilde Anaëlle Mélissia, 77550 MOISSY-CRAMAYEL (FR)
(74) Mandataire: Cabinet Beau de Loménie

(56) Documents cités:
- WO-A1-2016/027030
- WO-A1-2017/121949
- US-A1- 2012 099 981
- US-A1- 2014 113 088
- US-B2- 8 322 971

## Description

### Arrière-plan de l'invention

L'invention concerne les carters de turbine à gaz, et plus particulièrement, mais non exclusivement, les carters de soufflante de turbine à gaz pour moteurs aéronautiques.

Dans un moteur aéronautique à turbine à gaz, le carter de soufflante remplit plusieurs fonctions. Il définit notamment la veine d'entrée d'air dans le moteur, supporte éventuellement un matériau abradable en regard des sommets d'aubes de la soufflante et/ou une structure d'absorption d'ondes sonores pour le traitement acoustique en entrée du moteur et incorpore ou supporte un bouclier de rétention.

Précédemment réalisés en matériau métallique, les carters, comme le carter de soufflante, sont maintenant réalisés en matériau composite, c'est-à-dire à partir d'une préforme fibreuse densifiée par une matrice organique, ce qui permet de réaliser des pièces ayant une masse globale moins élevée que ces mêmes pièces lorsqu'elles sont réalisées en matériau métallique tout en présentant une résistance mécanique au moins équivalente sinon supérieure. La fabrication d'un carter de soufflante en matériau composite à matrice organique est notamment décrite dans le document US 8 322 971.

L'utilisation de carters en matériau composite permet de réduire la masse globale du moteur. Toutefois, les carters de soufflante des moteurs aéronautiques actuels présentent des dimensions plus importantes pouvant poser des problèmes de rigidité. En effet, un carter en matériau composite doit présenter une raideur minimale afin de ne pas répondre à des excitations vibratoires néfastes pour le moteur, comme dans le cas par exemple d'un croisement avec les sillages des aubes de la soufflante, le carter entrant alors en résonance lorsqu'une de ses fréquences propres croise une harmonique d'excitation produite par le sillage des aubes.

Il existe dans l'art antérieur des solutions qui ont pour but d'éviter l'apparition de modes indésirables dans un carter en matériau composite. Une première solution, notamment divulguée dans le document US 2014/212273 ou le document WO 2016/146924, consiste à munir le carter en matériau composite de raidisseurs rapportés ou intégrés. Cependant, cette solution entraîne une augmentation significative de la masse globale du carter, en particulier lorsqu'il s'agit d'un carter de soufflante ayant un grand diamètre. En outre, cette solution est compliquée à mettre en œuvre car il faut sectoriser les raidisseurs et ceux-ci peuvent se détacher à la suite d'un choc.

Une autre solution possible est d'augmenter localement l'épaisseur du carter mais cela revient également à augmenter significativement la masse globale du carter.

Une troisième solution, divulguée dans le document WO 2016/027030 consiste à raidir un carter de soufflante en matériau composite en le dotant d'une portion présentant un profil en oméga. Toutefois, cette solution résulte en une augmentation importante de l'encombrement et de la masse du carter. Par ailleurs, de par sa géométrie complexe en oméga, la réalisation et la mise en place d'équipements (par exemple panneaux acoustiques, cartouches d'abradable) sur ce type de carter se révèle fastidieuse. Enfin, le creux formé par la portion en oméga doit être comblé avec un matériau, ce qui pénalise encore la masse globale du carter.

Le document US2012/099981 décrit un carter de soufflante conforme au préambule des revendications 1 et 10.

### Objet et résumé de l'invention

L'invention a pour but de proposer un carter de turbine à gaz en matériau composite présentant une raideur accrue, et ce sans augmenter de manière significative la masse et/ou l'encombrement du carter.

Ce but est atteint grâce à un carter de turbine à gaz en matériau composite comprenant un renfort densifié par une matrice, ledit carter présentant une forme de révolution, le carter comportant, suivant une direction axiale, une bride amont, une zone de rétention présentant une épaisseur plus importante que le reste du carter et une bride aval, le carter présentant en section selon un plan défini par la direction axiale et une direction radiale un profil comportant au moins des première et deuxième portions inclinées l'une par rapport à l'autre et par rapport à l'axe du carter, les première et deuxième portions inclinées se rejoignant en un point situé entre la zone de rétention et l'une des brides, ledit point correspondant au sommet d'un angle formé par les première et deuxième portions inclinées, caractérisé en ce que la distance entre le sommet de l'angle et le rayon moyen du carter est comprise entre 1,5% et 4% dudit rayon moyen du carter.

La présence d'au moins une « cassure » ou d'un angle dans le profil du carter s'étendant en dehors d'un plan de référence aligné sur le rayon moyen du carter permet de rigidifier le carter en matériau composite en réduisant l'étendue spatiale de son mode vibratoire et en augmentant ses fréquences propres par rapport à un carter présentant un profil droit. Le carter de l'invention présente, par conséquent, une tenue modale améliorée, ce qui permet d'éviter l'apparition de modes de vibration indésirables en comparaison avec un carter présentant un profil droit. En outre, la solution de rigidification de l'invention n'entraîne pas d'augmentation de la masse du carter puisque la réalisation d'une cassure ou d'un angle dans le profil du carter ne nécessite pas d'ajout de matière.

Selon un aspect particulier du carter de l'invention, le rayon moyen du carter est de préférence compris entre 1 m et 2 m, plus préférentiellement entre 1 m et 1,7 m.

Selon un autre aspect particulier du carter de l'invention, les première et deuxième portions inclinées forment un angle dirigé vers l'intérieur du carter suivant la direction radiale.

Selon un autre aspect particulier du carter de l'invention, les première et deuxième portions inclinées forment un angle dirigé vers l'extérieur du carter suivant la direction radiale.

Selon un autre aspect particulier du carter de l'invention, le sommet d'angle formé par les première et deuxième portions inclinées est situé entre la zone de rétention et la bride aval.

Selon un autre aspect particulier du carter de l'invention, la distance entre le sommet de l'angle et le rayon moyen du carter est comprise entre 2% et 3,5% dudit rayon moyen du carter.

Selon un autre aspect particulier du carter de l'invention, le sommet d'angle formé à la jonction entre les première et deuxième portions inclinées est situé à une distance de la bride amont suivant la direction axiale correspondant à un pourcentage déterminé de la longueur totale du carter dans la direction axiale. Cela permet d'améliorer encore le gain fréquentiel et, par conséquent, la tenue modale du carter.

L'invention a également pour objet un moteur aéronautique à turbine à gaz ayant un carter selon l'invention.

L'invention concerne également un aéronef comprenant un ou plusieurs moteurs selon l'invention.

L'invention a encore pour objet un procédé de fabrication d'un carter en matériau composite pour une turbine à gaz, comprenant le tissage en une seule pièce par tissage tridimensionnel ou multicouche d'une texture fibreuse en forme de bande, la mise en forme de ladite texture par enroulement sur un outillage de support de manière à obtenir une préforme fibreuse comportant, suivant une direction axiale, une première partie formant une préforme d'une bride amont, une deuxième partie présentant une épaisseur plus importante que le reste de la préforme formant une préforme de zone de rétention et une troisième partie formant une préforme d'une bride aval, et la densification de la préforme fibreuse par une matrice, procédé dans lequel, lors de la mise en forme, la texture fibreuse est conformée de manière à obtenir une préforme fibreuse présentant en section selon un plan défini par la direction axiale et une direction radiale un profil comportant au moins des première et deuxième portions inclinées l'une par rapport à l'autre et par rapport à la direction axiale, les première et deuxième portions inclinées se rejoignant en un point situé entre la deuxième partie de la préforme formant une préforme de zone de rétention et la première partie formant une préforme d'une bride amont ou la troisième partie de la préforme formant une bride aval, ledit point correspondant au sommet d'un angle formé par les première et deuxième portions inclinées caractérisé en ce que la distance entre le sommet de l'angle et de rayon moyen de la préforme est comprise entre 1,5% et 4% du rayon moyen de la préforme.

Selon un aspect particulier du procédé de l'invention, le rayon moyen du carter est de préférence compris entre 1 m et 2 m, plus préférentiellement entre 1 m et 1,7 m.

Selon un autre aspect particulier du procédé de l'invention, les première et deuxième portions inclinées forment un angle dirigé vers l'intérieur de la préforme fibreuse suivant la direction radiale.

Selon un autre aspect particulier du procédé de l'invention, les première et deuxième portions inclinées forment un angle dirigé vers l'extérieur de la préforme fibreuse suivant la direction radiale.

Selon un autre aspect particulier du procédé de l'invention, le sommet d'angle formé par les première et deuxième portions inclinées est situé entre la zone de rétention et la bride aval.

Selon un autre aspect particulier du procédé de l'invention, la distance entre le sommet de l'angle et le rayon moyen du carter est comprise entre 2% et 3,5% dudit rayon moyen du carter.

Selon un autre aspect particulier du procédé de l'invention, le sommet d'angle formé à la jonction entre les première et deuxième portions inclinées est situé à une distance de la première partie de préforme formant une préforme de bride amont suivant la direction axiale correspondant à un pourcentage déterminé de la longueur totale de la préforme dans la direction axiale.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'un moteur aéronautique conformément à un mode de réalisation de l'invention,
- la figure 2 est une demi-vue vue en coupe axiale du carter de soufflante du moteur de la figure 1,
- la figure 3 est un graphique montrant le gain fréquentiel obtenu avec un carter selon l'invention en fonction de la distance entre le sommet d'angle et le rayon moyen du carter,
- la figure 4 est une demi-vue en coupe axiale d'un carter de soufflante conformément à un autre mode de réalisation de l'invention,
- la figure 5 est un graphique montrant le gain fréquentiel obtenu avec un carter selon l'invention en fonction de la position axiale du sommet d'angle sur le carter,
- la figure 6 est une vue en perspective montrant la mise en forme d'une texture fibreuse destinée à former le renfort du carter de soufflante de la figure 2,
- la figure 7 est une demi-vue en coupe axiale d'une préforme du carter de la figure 2 obtenue par enroulement de la texture fibreuse comme montré sur la figure 6,
- la figure 8 est une vue en coupe montrant le positionnement de secteurs d'injection sur la préforme du carter de la figure 2 obtenue par enroulement de la texture fibreuse comme montré sur la figure 6.

### Description détaillée de modes de réalisation

L'invention s'applique d'une manière générale à tout carter en matériau composite de turbine à gaz.

L'invention sera décrite ci-après dans le cadre de son application à un carter de soufflante de moteur aéronautique à turbine à gaz.

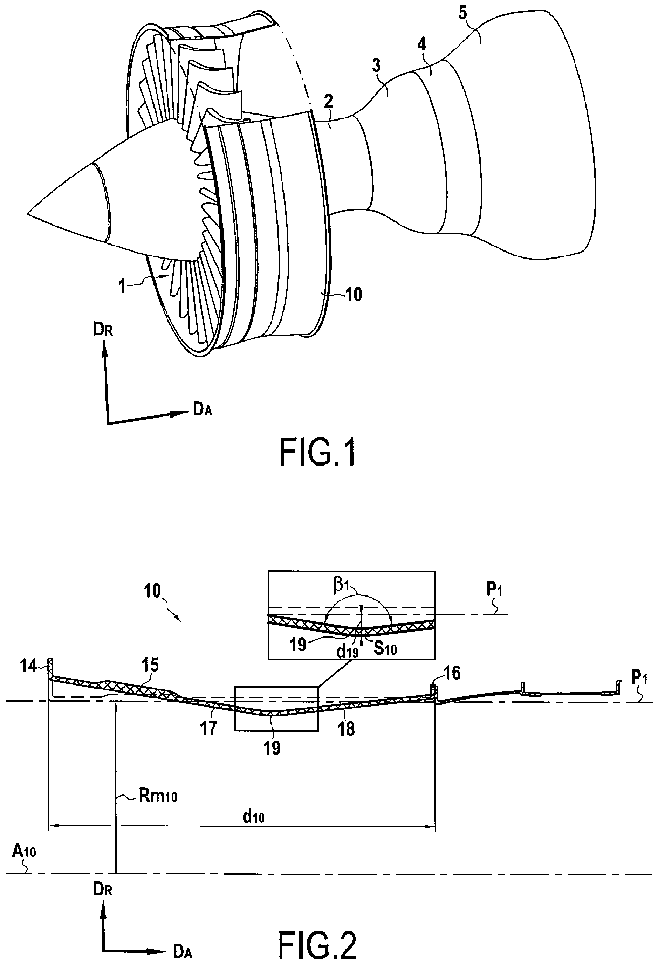

Un tel moteur, comme montré très schématiquement par la figure 1 comprend, de l'amont vers l'aval dans le sens de l'écoulement de flux gazeux, une soufflante 1 disposée en entrée du moteur, un compresseur 2, une chambre de combustion 3, une turbine haute-pression 4 et une turbine basse pression 5.

Le moteur est logé à l'intérieur d'un carter comprenant plusieurs parties correspondant à différents éléments du moteur. Ainsi, la soufflante 1 est entourée par un carter de soufflante 10 présentant une forme de révolution.

La figure 2 montre le profil du carter de soufflante 10, le profil correspondant à une coupe ou section selon un plan défini par une direction radiale D_{A} parallèle à l'axe A₁₀ du carter 10 et une direction radiale D_{R}. Le carter 10 est ici réalisé en matériau composite à matrice organique, c'est-à-dire à partir d'un renfort en fibres par exemple de carbone, verre, aramide ou céramique, densifié par une matrice en polymère, par exemple époxide, bismaléimide ou polyimide. La fabrication d'un tel carter est notamment décrite dans le document US 8 322 971.

Suivant la direction axiale D_{A}, le carter 10 comporte une bride amont 14 s'étendant dans la direction radiale D_{R}, une zone de rétention 15 présentant une surépaisseur par rapport au reste du carter et une bride aval 16 s'étendant dans la direction radiale D_{R}. Les brides 14 et 16 présentes aux extrémités amont et aval du carter 10 permettent son montage et sa liaison avec d'autres éléments. La zone de rétention 15 correspond à une portion de surépaisseur du carter qui s'étend sur une longueur déterminée dans la direction axiale D_{A} afin de former une zone de rétention capable de retenir des débris, particules ou objets ingérés en entrée du moteur, ou provenant de l'endommagement d'aubes de la soufflante, et projetés radialement par rotation de la soufflante, pour éviter qu'ils traversent le carter et endommagent d'autres parties de l'aéronef.

Conformément à l'invention, le carter 10 comporte des première et deuxième portions 17 et 18 inclinées à la fois l'une par rapport à l'autre et par rapport à l'axe A₁₀ du carter. Les première et deuxième portions inclinées 17 et 18 se rejoignent en un point S₁₀ situé entre la zone de rétention 15 et l'une des brides amont ou aval, ici la bride aval 16. Le point S₁₀ correspond au sommet 19 d'un angle β₁ formé par les première et deuxième portions inclinées. Dans l'exemple décrit ici, les première et deuxième portions inclinées 17 et 18 forment un angle β₁ obtus dont le sommet 19 est dirigé vers l'intérieur du carter 10.

Toujours conformément à l'invention, le sommet 19 de l'angle β₁ est situé suivant la direction radiale D_{R} à une distance déterminée d_{R19} d'un plan rectiligne P₁ aligné sur le rayon moyen Rm₁₀ du carter 10. On entend ici par « rayon moyen du carter », la moyenne entre le diamètre du profil interne et celui du profil externe carter en dehors des brides.

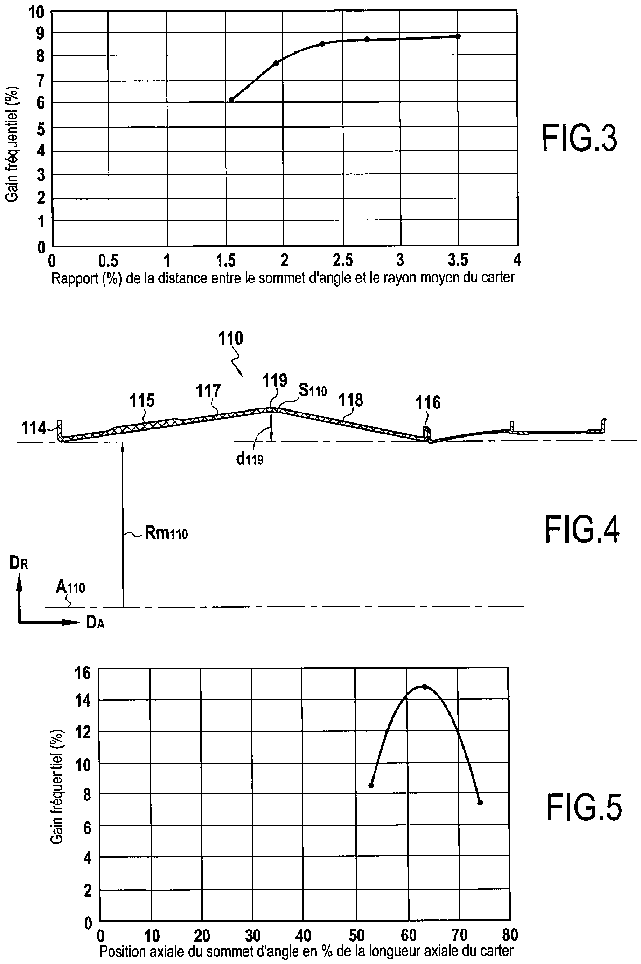

Les inventeurs ont déterminé que la distance d₁₉ entre le sommet 19 de l'angle β₁ et le rayon moyen du carter (plan P₁) suivant la direction radiale D_{R} est comprise entre 1,5% et 4% du rayon moyen du carter, préférentiellement entre 2% et 3,5% du rayon moyen du carter. A titre d'exemple non limitatif, la figure 3 montre le gain fréquentiel obtenu en fonction de la distance entre le sommet de l'angle formé par des première et deuxième portions inclinées telles que les portions 17 et 18 du carter 10 de la figure 2 et le rayon moyen du carter tel que le rayon moyen Rm₁₀ du carter 10 de la figure 2, le gain fréquentiel étant déterminé par rapport à un carter droit, c'est-à-dire ne présentant pas de cassure ou sommet d'angle. Dans un exemple de réalisation particulier, le rayon moyen Rm₁₀ est compris entre 1 mètre (m) et 2 m, préférentiellement entre 1 m et 1,7 m. On observe par exemple que pour un carter présentant un rayon moyen de 1.17 m, un gain fréquentiel de 9% est atteint à partir d'une distance de 35 mm entre le sommet d'angle et le rayon moyen, soit environ 3% du rayon moyen du carter, le gain fréquentiel stagnant substantiellement à cette valeur pour des distances entre le sommet d'angle et le rayon moyen du carter plus importantes. Le gain fréquentiel correspond ici au rapport (pourcentage) entre, d'une part, la différence entre la fréquence obtenue avec un carter présentant une cassure ou sommet d'angle et la fréquence obtenue avec un même carter sans cassure ou sommet d'angle et, d'autre part, la fréquence obtenue avec un même carter sans cassure ou sommet d'angle.

La figure 3 montre en exemple des valeurs de pourcentage mesurées entre 1,5% et 3,5% mais l'intervalle de mesure pourrait être élargi en extrapolant la courbe. En dessous et à proximité de 1,5%, la courbe serait sensiblement linéairement dans le prolongement avec une pente similaire à celle constatée entre 1,5% et 2%. Entre 3% et 4%, la pente de la courbe est à considérer également comme sensiblement constante.

Le carter selon l'invention peut comprendre une ou plusieurs paires de portion inclinées définissant chacune une cassure ou un sommet d'angle situé entre la zone de rétention et l'une des brides.

Le ou les sommets d'angle peuvent être dirigés vers l'intérieur du carter suivant la direction radiale comme c'est le cas pour le sommet d'angle 19 du carter 10 de la figure 2. Le ou les sommets d'angle peuvent être dirigés vers l'extérieur du carter suivant la direction radiale comme c'est le cas pour le carter 110 de la figure 4 qui comprend des première et deuxième portions inclinées 117 et 118 présentes entre une zone de rétention 115 en aval d'une bride amont 114 et une bride aval 116, les portion inclinées 117 et 118 se rejoignant en un point S₁₁₀ formant un sommet d'angle 119 dirigé vers l'extérieur du carter 110. La distance d₁₁₉ suivant la direction radiale entre le sommet d'angle 119 et le rayon moyen Rm₁₁₀ du carter 110 défini à partir de l'Axe A₁₁₀ du carter est comprise entre 1,5% et 4% dudit rayon moyen du carter 110, préférentiellement entre 2% et 3,5% du rayon moyen du carter. Sur la figure 4, le rayon moyen Rm₁₁₀ du carter 110 correspond par approximation au rayon d'un cylindre droit coïncidant avec l'intérieur de la bride aval 116 du carter 110.

Par ailleurs, le ou les sommets d'angle peuvent être présents à différentes positions axiales entre la zone de rétention et l'une des brides du carter. Les inventeurs ont toutefois déterminé que le gain fréquentiel peut être encore amélioré en fonction de la position axiale du sommet d'angle formé à la jonction entre les première et deuxième portions inclinées. A titre d'exemple non limitatif, la figure 5 montre le gain fréquentiel obtenu en fonction de la position axiale du sommet de l'angle formé par des première et deuxième portions inclinées telles que les portions 17 et 18 du carter 10 de la figure 2 par rapport à la taille du carter dans la direction axiale, c'est-à-dire la distance entre les brides amont et aval du carter telle que la distance d10 entre la bride amont 14 et la bride aval 16 du carter 10 de la figure 2, le gain fréquentiel étant déterminé par rapport à un carter droit, c'est-à-dire ne présentant pas de cassure ou sommet d'angle. Le sommet d'angle est ici situé à 3% du rayon moyen du carter. On observe que pour un carter présentant une distance axiale totale entre ses brides amont et aval de 90 cm, un gain fréquentiel de 15% est atteint lorsque que le sommet d'angle est situé à environ 600 mm de la bride amont dans la direction axiale D_{A} (distance d_{A19}), soit 65% de la longueur totale du carter dans la direction axiale D_{A} en partant de la bride amont. La valeur de 65% correspond à une valeur déterminée en fonction des dimensions d'un carter décrites ci-avant. D'autres valeurs peuvent être bien entendu considérées suivant d'autres dimensions de carter, par exemple en ce qui concerne le diamètre et/ou la distance axiale du carter.

La figure 5 montre des valeurs pour des positions axiales de sommet d'angle côté bride aval mais le sommet d'angle peut être côté amont pour des configurations différentes de carter dans lesquelles la zone de rétention serait plus proche de la bride aval que de la bride amont.

On décrit maintenant un procédé de fabrication du carter 10 illustré sur la figure 2 en matériau composite à renfort fibreux densifié par une matrice.

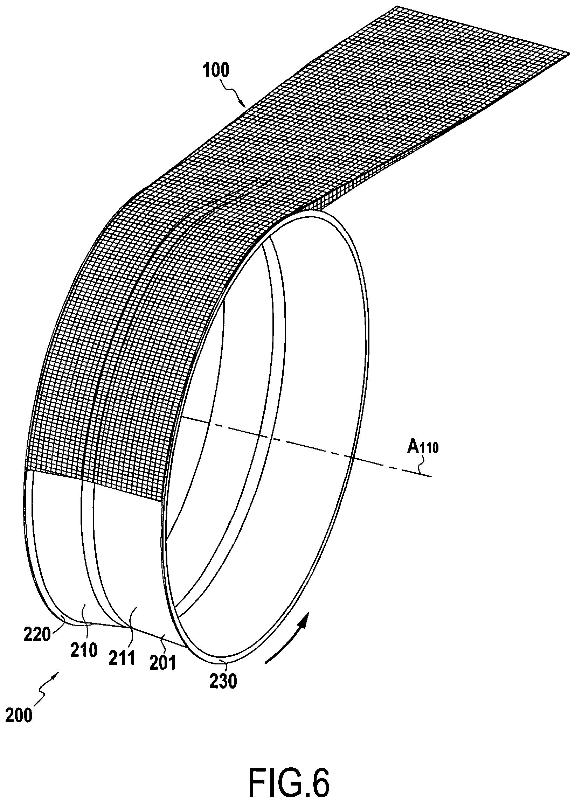

La réalisation du carter débute par la formation d'une texture fibreuse sous forme d'une bande. La figure 6 montre très schématiquement une structure fibreuse 100 tissée sous forme d'une bande destinée à former une préforme fibreuse d'un carter de moteur d'avion.

La structure fibreuse 100 est obtenue par tissage tridimensionnel ou multicouche réalisé de façon connue au moyen d'un métier à tisser de type jacquard sur lequel on a disposé un faisceau de fils de chaînes ou torons en une pluralité de couches, les fils de chaînes étant liés par des fils de trame.

Dans l'exemple illustré, le tissage tridimensionnel est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage multicouche connus pourront être utilisés, comme notamment ceux décrits dans le document WO 2006/136755 dont le contenu est incorporé ici par voie de référence.

La structure fibreuse peut être notamment tissée à partir de fils de fibres de carbone, de céramique telle que du carbure de silicium, de verre, ou encore d'aramide.

Comme illustré sur la figure 6, le renfort fibreux est formé par enroulement sur un mandrin 200 de la texture fibreuse 100 réalisée par tissage tridimensionnel avec épaisseur évolutive, le mandrin ayant un profil correspondant à celui du carter à réaliser. Avantageusement, le renfort fibreux constitue une préforme fibreuse tubulaire complète du carter 10 formant une seule pièce avec des première et deuxième portions inclinés correspondant aux portions inclinées 17 et 18 du carter 10 qui définissent une cassure ou le sommet d'angle 19.

A cet effet, le mandrin 200 présente une surface externe 201 dont le profil correspond à la surface interne du carter à réaliser. Par son enroulement sur le mandrin 200, la texture fibreuse 100 épouse le profil de celui-ci. Le mandrin 200 comporte sur sa surface externe 201 des première et deuxième pentes 210 et 211 dont la forme et les dimensions correspondent à celles des première et deuxième portions inclinées 17 et 18 du carter 10 à former. Le mandrin 200 comporte également deux flasques 220 et 230 pour former des parties de préforme fibreuse correspondant aux brides 14 et 15 du carter 10.

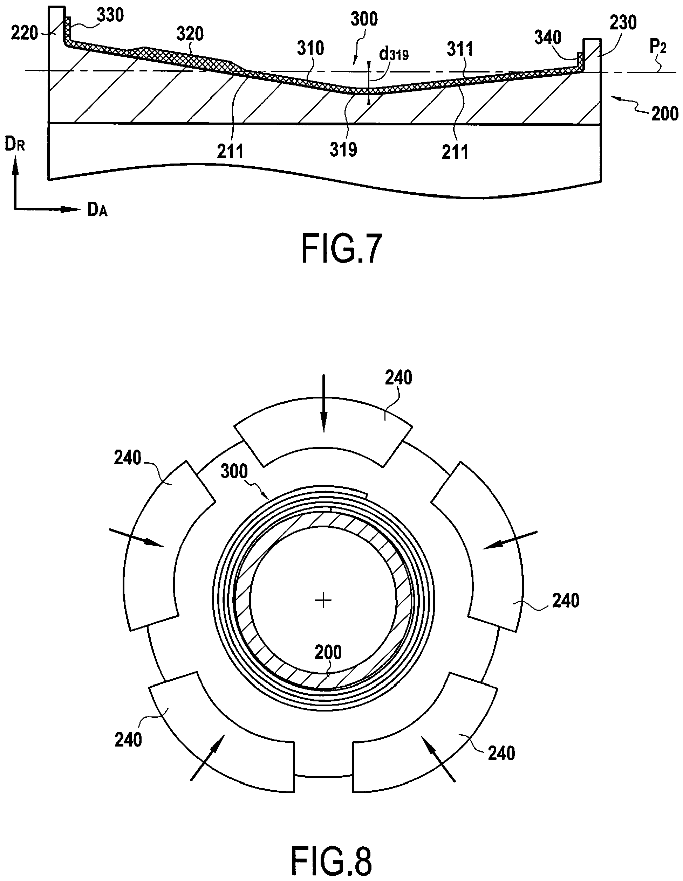

La figure 7 montre une vue en coupe de la préforme fibreuse 300 obtenue après enroulement de la texture fibreuse 100 en plusieurs couches sur le mandrin 200. Le nombre de couches ou spires est fonction de l'épaisseur désirée et de l'épaisseur de la texture fibreuse. Il est de préférence au moins égal à 2. Dans l'exemple décrit ici, la préforme 300 comprend 4 couches de texture fibreuse 100.

On obtient une préforme fibreuse 300 avec des première et deuxième portions inclinées 310 et 311 situées entre une partie de plus forte épaisseur 320 destinée à former la zone de rétention 15 du carter et une partie d'extrémité 340 destinée à former la bride aval 16 du carter 10, une autre partie d'extrémité 330 opposée à la partie 340 étant destinée à former la bride amont 14 du carter 10. Les première et deuxième portions inclinées 310 et 311 se rejoignent en formant un sommet d'angle 319 correspondant au sommet d'angle 19 présent sur le carter 10. La distance d₃₁₉ entre le sommet d'angle 319 et le rayon moyen de la préforme 300 matérialisé sur la figure 7 par un plan P₂ est comprise entre 1,5% et 4% dudit rayon moyen de la préforme (préférentiellement entre 2% et 3,5% dudit rayon moyen de la préforme).

On procède ensuite à la densification de la préforme fibreuse 300 par une matrice.

La densification de la préforme fibreuse consiste à combler la porosité de la préforme, dans tout ou partie du volume de celle-ci, par le matériau constitutif de la matrice.

La matrice peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 8, la préforme fibreuse 300 est ici placée entre une pluralité de secteurs 240 formant contre-moule et le mandrin 200 formant support, ces éléments présentant respectivement la forme extérieure et la forme intérieure du carter à réaliser. Ensuite, on injecte le précurseur liquide de matrice, par exemple une résine, dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Selon un aspect de l'invention, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme du carter à réaliser. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. A cet effet, le mandrin 200 est séparable en deux parties au niveau de la jonction entre les première et deuxième pentes 210 et 211 afin de permettre le démoulage de la pièce. Au final, la pièce est détourée pour enlever l'excès de résine et les chanfreins sont usinés pour obtenir le carter 10 illustré en figures 1 et 2.

Dans la description qui précède une unique paire de première et deuxième portions inclinées sont considérées entre la zone de rétention et la bride aval. Dans le cas d'un carter aux dimensions appropriées en particulier dans la direction axiale, deux paires de première et deuxième portions inclinées peuvent être considérées consécutivement, par exemple avec des angles similaires dans les paires de portions inclinées et des valeurs similaires de distance entre le sommet de l'angle et le rayon moyen du carter. Ces portions inclinées pourraient par exemple être agencées en W avec le cas échéant un tronçon cylindrique entre les deux paires.

## Revendications

1. Carter (10) de turbine à gaz en matériau composite comprenant un renfort densifié par une matrice, ledit carter présentant une forme de révolution, le carter comportant, suivant une direction axiale (D_{A}), une bride amont (14), une zone de rétention (15) présentant une épaisseur plus importante que le reste du carter et une bride aval (16),
le carter (10) présentant en section selon un plan défini par la direction axiale (D_{A}) et une direction radiale (D_{R}) un profil comportant au moins des première et deuxième portions inclinées (17, 18) l'une par rapport à l'autre et par rapport à l'axe du carter (A₁₀), les première et deuxième portions inclinées se rejoignant en un point (S₁₀) situé entre la zone de rétention (15) et l'une des brides (16, 14), ledit point correspondant au sommet (19) d'un angle (β₁) formé par les première et deuxième portions inclinées (17, 18), **caractérisé en ce que** la distance (d₁₉) entre le sommet (19) de l'angle (β₁) et le rayon moyen (Rm₁₀) du carter est comprise entre 1,5% et 4% dudit rayon moyen du carter.

2. Carter selon la revendication 1, dans lequel le rayon moyen (Rm₁₀) du carter est compris entre 1 m et 2 m.

3. Carter selon la revendication 1 ou 2, dans lequel le rayon moyen (Rm10) du carter est de 1,7 m.

4. Carter selon l'une quelconque des revendications 1 à 3, dans lequel les première et deuxième portions inclinées (17, 18) forment un angle (β₁) dirigé vers l'intérieur du carter (10) suivant la direction radiale (DR).

5. Carter selon l'une quelconque des revendications 1 à 3, dans lequel les première et deuxième portions inclinées (117, 118) forment un angle dirigé vers l'extérieur du carter (110) suivant la direction radiale (DR).

6. Carter selon l'une quelconque des revendications 1 à 5, dans lequel le sommet (19) d'angle (β₁) formé par les première et deuxième portions inclinées (17, 18) est situé entre la zone de rétention (15) et la bride aval (16).

7. Carter selon l'une quelconque des revendications 1 à 6, dans lequel la distance (d₁₉) entre le sommet (19) de l'angle (β₁) et le rayon moyen (Rₘ₁₀) du carter est comprise entre 2% et 3,5% dudit rayon moyen du carter.

8. Moteur aéronautique à turbine à gaz ayant un carter (10) selon l'une quelconque des revendications 1 à 7.

9. Aéronef comprenant un ou plusieurs moteurs selon la revendication 8.

10. Procédé de fabrication d'un carter (10) en matériau composite pour une turbine à gaz, comprenant le tissage en une seule pièce par tissage tridimensionnel ou multicouche d'une texture fibreuse (100) en forme de bande, la mise en forme de ladite texture par enroulement sur un outillage de support (200) de manière à obtenir une préforme fibreuse (300) comportant, suivant une direction axiale (D_{A}), une première partie (330) formant une préforme d'une bride amont, une deuxième partie (320) présentant une épaisseur plus importante que le reste de la préforme formant une préforme de zone de rétention et une troisième partie (340) formant une préforme d'une bride aval, et la densification de la préforme fibreuse par une matrice, procédé dans lequel, lors de la mise en forme, la texture fibreuse (100) est conformée de manière à obtenir une préforme fibreuse (300) présentant en section selon un plan défini par la direction axiale et une direction radiale un profil comportant au moins des première et deuxième portions inclinées (310, 311) l'une par rapport à l'autre et par rapport à la direction axiale (D_{A}), les première et deuxième portions inclinées se rejoignant en un point situé entre la deuxième partie (320) de la préforme formant une préforme de zone de rétention et la première partie (330) formant une préforme d'une bride amont ou la troisième partie (340) de la préforme formant une bride aval, ledit point correspondant au sommet (319) d'un angle formé par les première et deuxième portions inclinées (310, 311), **caractérisé en ce que** la distance (d₃₁₉) entre le sommet (319) de l'angle et de rayon moyen de la préforme est comprise entre 1,5% et 4% rayon moyen de la préforme.

11. Procédé selon la revendication 10, dans lequel le rayon moyen (Rm10) du carter est compris entre 1 m et 2 m.

12. Procédé selon la revendication 10 ou 11, dans lequel les première et deuxième portions inclinées (310, 311) forment un angle dirigé vers l'intérieur de la préforme fibreuse (300) suivant la direction radiale (D_{A}).

13. Procédé selon la revendication 10 ou 11, dans lequel les première et deuxième portions inclinées forment un angle dirigé vers l'extérieur de la préforme fibreuse suivant la direction radiale.

14. Procédé selon l'une quelconque des revendications 10 à 13, dans lequel le sommet (19) d'angle (β₁) formé par les première et deuxième portions inclinées (17, 18) est situé entre la zone de rétention (15) et la bride aval (16).

15. Carter selon l'une quelconque des revendications 10 à 14, dans lequel la distance (d₁₉) entre le sommet (19) de l'angle (β₁) et le rayon moyen (Rₘ₁₀) du carter est comprise entre 2% et 3,5% dudit rayon moyen du carter.

## Patentansprüche

1. Gehäuse (10) einer Gasturbine aus Verbundwerkstoff mit einer durch eine Matrix verdichteten Verstärkung, wobei das Gehäuse eine Rotationsform aufweist, wobei das Gehäuse in einer axialen Richtung (D_{A}) einen stromaufwärtigen Flansch (14), einen Haltebereich (15), der eine größere Dicke als der Rest des Gehäuses aufweist, sowie einen stromabwärtigen Flansch (16) umfasst,
wobei das Gehäuse (10) im Schnitt entlang einer durch die axiale Richtung (D_{A}) und eine radiale Richtung (D_{R}) definierten Ebene ein Profil aufweist, das wenigstens einen ersten und einen zweiten Abschnitt (17, 18), welche zueinander und zu der Achse des Gehäuses (A₁₀) geneigt sind, umfasst, wobei sich der erste und der zweite geneigte Abschnitt an einem Punkt (S₁₀) treffen, der zwischen dem Haltebereich (15) und einem der Flansche (16, 14) gelegen ist, wobei der Punkt dem Scheitelpunkt (19) eines Winkels (β₁) entspricht, der durch den ersten und den zweiten geneigten Abschnitt (17, 18) gebildet ist, **dadurch gekennzeichnet, dass** der Abstand (d₁₉) zwischen dem Scheitelpunkt (19) des Winkels (β₁) und dem mittleren Radius (Rₘ₁₀) des Gehäuses zwischen 1,5 % und 4 % des mittleren Radius des Gehäuses beträgt.

2. Gehäuse nach Anspruch 1, bei dem der mittlere Radius (Rₘ₁₀) des Gehäuses zwischen 1 m und 2 m beträgt.

3. Gehäuse nach Anspruch 1 oder 2, bei dem der mittlere Radius (Rₘ₁₀) des Gehäuses 1,7 m beträgt.

4. Gehäuse nach einem der Ansprüche 1 bis 3, bei dem der erste und der zweite geneigte Abschnitt (17, 18) einen Winkel (β₁) bilden, der in der radialen Richtung (D_{R}) zur Innenseite des Gehäuses (10) gerichtet ist.

5. Gehäuse nach einem der Ansprüche 1 bis 3, bei dem der erste und der zweite geneigte Abschnitt (117, 118) einen Winkel bilden, der in der radialen Richtung (D_{R}) zur Außenseite des Gehäuses (110) gerichtet ist.

6. Gehäuse nach einem der Ansprüche 1 bis 5, bei dem der Scheitelpunkt (19) des Winkels (β₁), der durch den ersten und den zweiten geneigten Abschnitt (17, 18) gebildet ist, zwischen dem Haltebereich (15) und dem stromabwärtigen Flansch (16) gelegen ist.

7. Gehäuse nach einem der Ansprüche 1 bis 6, bei dem der Abstand (d₁₉) zwischen dem Scheitelpunkt (19) des Winkels (β₁) und dem mittleren Radius (Rₘ₁₀) des Gehäuses zwischen 2 % und 3,5 % des mittleren Radius des Gehäuses beträgt.

8. Luftfahrt-Gasturbinentriebwerk mit einem Gehäuse (10) nach einem der Ansprüche 1 bis 7.

9. Luftfahrzeug, das ein oder mehrere Triebwerke nach Anspruch 8 umfasst.

10. Verfahren zur Herstellung eines Gehäuses (10) aus Verbundwerkstoff für eine Gasturbine, umfassend das einstückige Weben mittels dreidimensionalem oder mehrlagigem Weben einer streifenförmigen Faserstruktur (100), das Informbringen der Struktur durch Aufwickeln auf ein Tragwerkzeug (200), um einen Faservorformling (300) zu erhalten, der in einer axialen Richtung (D_{A}) einen ersten Teil (330), welcher einen Vorformling eines stromaufwärtigen Flansches bildet, einen zweiten Teil (320), welcher eine größere Dicke als der Rest des Vorformlings, der einen Vorformling eines Haltebereichs bildet, aufweist, sowie einen dritten Teil (340), welcher einen Vorformling eines stromabwärtigen Flansches bildet, umfasst, und das Verdichten des Faservorformlings durch eine Matrix, Verfahren, bei dem während des Informbringens die Faserstruktur (100) derart geformt wird, dass ein Faservorformling (300) erhalten wird, der im Schnitt entlang einer durch die axiale Richtung und eine radiale Richtung definierten Ebene ein Profil aufweist, das wenigstens einen ersten und einen zweiten Abschnitt (310, 311), welche zueinander und zu der axialen Richtung (D_{A}) geneigt sind, umfasst, wobei sich der erste und der zweite geneigte Abschnitt an einem Punkt treffen, der zwischen dem zweiten Teil (320) des Vorformlings, welcher einen Haltebereichsvorformling bildet, und dem ersten Teil (330), der einen Vorformling eines stromaufwärtigen Flansches bildet, oder dem dritten Teil (340) des Vorformlings, der einen stromabwärtigen Flansch bildet, gelegen ist, wobei der Punkt dem Scheitelpunkt (319) eines Winkels entspricht, der durch den ersten und den zweiten geneigten Abschnitt (310, 311) gebildet ist, **dadurch gekennzeichnet, dass** der Abstand (d₃₁₉) zwischen dem Scheitelpunkt (319) des Winkels und dem mittleren Radius des Vorformlings zwischen 1,5 % und 4 % des mittleren Radius des Vorformlings beträgt.

11. Verfahren nach Anspruch 10, bei dem der mittlere Radius (Rₘ₁₀) des Gehäuses zwischen 1 m und 2 m beträgt.

12. Verfahren nach Anspruch 10 oder 11, bei dem der erste und der zweite geneigte Abschnitt (310, 311) einen Winkel bilden, der in der radialen Richtung (D_{A}) zur Innenseite des Faservorformlings (300) gerichtet ist.

13. Verfahren nach Anspruch 10 oder 11, bei dem der erste und der zweite geneigte Abschnitt einen Winkel bilden, der in der radialen Richtung zur Außenseite des Faservorformlings gerichtet ist.

14. Verfahren nach einem der Ansprüche 10 bis 13, bei dem der Scheitelpunkt (19) des Winkels (β₁), der durch den ersten und den zweiten geneigten Abschnitt (17, 18) gebildet ist, zwischen dem Haltebereich (15) und dem stromabwärtigen Flansch (16) gelegen ist.

15. Verfahren nach einem der Ansprüche 10 bis 14, bei dem der Abstand (d₁₉) zwischen dem Scheitelpunkt (19) des Winkels (β₁) und dem mittleren Radius (Rₘ₁₀) des Gehäuses zwischen 2 % und 3,5 % des mittleren Radius des Gehäuses beträgt.

## Claims

1. A gas turbine casing (10) made of composite material comprising reinforcement densified by a matrix, said casing presenting an axisymmetric shape, the casing comprising, in an axial direction (D_{A}) : an upstream flange (14); a retention zone (15) presenting thickness greater than the remainder of the casing; and a downstream flange (16); wherein the casing (10) presents, in section on a plane defined by the axial direction (D_{A}) and by a radial direction (D_{R}), a profile including at least first and second inclined portions (17, 18) that are inclined relative to each other and relative to the axis of the casing (A₁₀), the first and second inclined portions meeting at a point (S₁₀) situated between the retention zone (15) and one of the flanges (16, 14), said point corresponding to the vertex (19) of an angle (β₁) formed by the first and second inclined portions (17, 18), and wherein the distance (d₁₉) between the vertex (19) of the angle (β₁) and the mean radius (Rm₁₀) of the casing lies in the range 1.5% to 4% of said mean radius of the casing.

2. A casing according to claim 1, wherein the mean radius (Rₘ₁₀) of the casing lies in the range 1 m to 2 m.

3. A casing according to claim 1 or 2, wherein the mean radius (Rm₁₀) of the casing is 1.7 m.

4. A casing according to any one of claims 1 to 3, wherein the first and second inclined portions (17, 18) form an angle (β₁) directed towards the inside of the casing (10) in the radial direction (D_{R}).

5. A casing according to any one of claims 1 to 3, wherein the first and second inclined portions (117, 118) form an angle directed towards the outside of the casing (110) in the radial direction (D_{R}).

6. A casing according to any one of claims 1 to 5, wherein the vertex (19) of the angle (β₁) formed by the first and second inclined portions (17, 18) lies between the retention zone (15) and the downstream flange (16).

7. A casing according to any one of claims 1 to 6, wherein the distance (d₁₉) between the vertex (19) of the angle (β₁) and the mean radius (Rm₁₀) of the casing lies in the range 2% and 3.5% of said mean radius of the casing.

8. A gas turbine engine having a casing (10) according to claims 1 to 8.

9. An aircraft having one or more engines according to claim 8.

10. A method of fabricating a composite material casing (10) for a gas turbine, the method comprising: using three-dimensional or multilayer weaving to weave a fiber texture (100) as a single piece in the form of a strip; shaping said texture by winding it onto support tooling (200) so as to obtain a fiber preform (300) that comprises, in an axial direction (D_{A}), a first portion (330) forming a preform for an upstream flange, a second portion (320) presenting thickness greater than the thickness of the remainder of the preform in order to form a retention zone preform, and a third portion (340) forming a preform for a downstream flange; and densifying the fiber preform with a matrix, wherein during shaping, the fiber texture (100) is shaped in such a manner as to obtain a fiber preform (300) presenting in section on a plane defined by the axial direction and by a radial direction a profile that includes at least first and second inclined portions (310, 311) that are inclined relative to each other and relative to the axial direction (D_{A}), the first and second inclined portions meeting at a point situated between the second portion (320) of the preform forming a retention zone preform and the first portion (330) forming an upstream flange preform or the third portion (340) forming a downstream flange preform, said point corresponding to the vertex (319) of an angle formed by the first and second inclined portions (310, 311), and wherein the distance (d_{R319}) between the vertex (319) of the angle and the mean radius of the preform lies in the range 1.5% to 4% of the mean radius of the preform.

11. A method according to claim 10, wherein the mean radius (Rm₁₀) of the casing lies in the range 1 m to 2 m.

12. A method according to claim 10 or 11, wherein the first and second inclined portions (310, 311) form an angle directed towards the inside of the fiber preform (300) in the radial direction (D_{A}).

13. A method according to any one of claims 10 to 12, wherein the first and second inclined portions form an angle directed towards the outside of the fiber preform in the radial direction.

14. A method according to any one of claims 10 to 13, wherein the vertex (19) of the angle (β₁) formed by the first and second inclined portions (17, 18) lies between the retention zone (15) and the downstream flange (16).

15. A method according to any one of claims 10 to 14, wherein the distance (d₁₉) between the vertex (19) of the angle (β₁) and the mean radius (Rm₁₀) of the casing lies in the range 2% and 3.5% of said mean radius of the casing.
